# FASCICULE DE BREVET EUROPEEN

(11) **EP 2 753 973 B1**
(45) Date de publication et mention de la délivrance du brevet: **15.12.2021**
(21) Numéro de dépôt: 12753736.3
(22) Date de dépôt: 04.09.2012
(51) Int. Cl.: G02C 7/04, G02C 7/12, G02B 5/30, G02C 7/10, G02C 7/02, G02B 1/04, G02B 1/08, G02B 5/20, B29D 11/00, B29C 45/14

(54) **ÉLÉMENT OPTIQUE POLARISANT TEINTÉ ET PROCÉDÉ DE FABRICATION D'UN TEL ÉLÉMENT**
GETÖNTES OPTISCHES POLARISIERUNGSELEMENT UND VERFAHREN ZUR HERSTELLUNG EINES SOLCHEN ELEMENTS
TINTED POLARIZING OPTICAL ELEMENT, AND METHOD FOR MANUFACTURING SUCH AN ELEMENT

(30) Priorité: 06.09.2011 FR 1102704
(43) Date de publication de la demande: 16.07.2014
(73) Titulaire: BNL Eurolens, 01200 Bellegarde sur Valserine (FR)
(72) Inventeur: CLERC, Didier, F-01200 Eloise (FR); LEDIEN, Franck, F-01130 Echallon (FR)
(74) Mandataire: Croonenbroek, Thomas Jakob
(86) Numéro de dépôt international: PCT/EP2012/067231
(87) Numéro de publication internationale: WO 2013/034557

(56) Documents cités:
- WO-A2-2004/059370
- US-A1- 2003 184 863
- None

## Description

La présente invention concerne un procédé de fabrication d'un élément polarisant teinté.

Par élément optique, on entend en particulier une lentille, correctrice ou non, qui peut être utilisée comme un verre de lunette, par exemple pour des lunettes, en particulier des lunettes de soleil ou des masques ou analogues.

A ce jour, on connaît des ensembles polarisants qui sont formés par deux couches d'un matériau par exemple thermoplastique prenant en sandwich un film polarisant, par exemple un film de polyvinylalcool (PVA).

Pour faire une paire de lunettes de soleil sans effet correcteur, on injecte alors une couche d'un matériau thermoplastique, par exemple du polycarbonate sur la couche de l'ensemble polarisant destinée à être en vis-à-vis de l'œil.

L'élément optique ainsi constitué peut déjà servir par exemple pour des lunettes de soleil polarisantes non correctrices. Il suffit alors de façonner le contour de l'élément optique pour l'adapter à la monture.

Pour obtenir des « verres » semi-finis, c'est-à-dire des éléments optiques dont on peut non seulement façonner le contour externe pour l'adapter à une monture, également appelé détourage ou taillage, mais dont on peut aussi adapter la correction optique, également appelé le surfaçage, l'épaisseur de la troisième couche est choisie telle qu'elle permette le surfaçage de ce « verre » pour obtenir la correction optique souhaitée.

La mise en œuvre d'un tel procédé pour la réalisation des « verres » semi-finis conduit à la réalisation de lunettes présentant une teinte définie (généralement brune ou grise) qui est fixée par la teinte même de l'élément polarisant.

Cependant, on souhaiterait pourvoir changer, en particulier pour des aspects esthétiques, la teinte du verre, ceci de manière aisée, même pour de petites séries.

Des solutions connues consistent à utiliser par exemple un film polarisant teinté. Toutefois, ces films n'existent qu'avec une gamme de teintes très limitée.

On pourrait envisager de teinter la troisième couche de matériau thermoplastique qui dans les procédés traditionnels est une couche de matériaux « cristal » c'est-à-dire transparente mais non teintée.

Toutefois, dès que l'on réalise le surfaçage de la troisième couche pour obtenir l'effet correcteur souhaité, la teinte du verre n'est plus uniforme du fait de cette étape de surfaçage qui va générer des variations d'épaisseurs.

On connaît du document WO0259821 une lentille ophtalmique qui peut être teintée. Cette lentille est réalisée selon un processus plus complexe à plusieurs couches avec une couche isotropique de support, une couche d'un film polarisant, une couche d'un film adhésif en polyuréthane et d'une couche de polycarbonate cristal.

Selon ce document, un colorant peut être introduit dans le film adhésif en polyuréthane de manière à obtenir des verres optiques de toutes les couleurs.

Cependant, il faut noter que le processus de fabrication des verres selon WO0259821 n'est pas un procédé par injection et est très différent de celui de la Demanderesse, plus complexe et plus lent. En effet, le film adhésif joue un rôle important et nécessite pour son application des temps de séchage d'au moins 30 minutes, puis un traitement mécanique par application d'un rouleau pour chasser éventuellement des bulles d'air entre le film adhésif et le film polarisant, ce qui pourrait affecter de façon importante la qualité optique des verres. Le document WO 2004/059370 A2 divulgue un élément optique polarisant teinté comprenant un ensemble polarisant composé d'au moins une première et d'une seconde couches d'un matériau thermoplastique prenant en sandwich un film polarisant, comportant de plus une troisième couche d'un matériau thermoplastique et une quatrième couche d'un matériau thermoplastique cristal adhérant par injection à la troisième couche. Le document US 2003/184863 A1 divulgue un élément optique polarisant teinté.

La présente invention vise donc à proposer un procédé de fabrication selon la revendication 1. Des modes de réalisation additionnels sont définis dans les revendications dépendantes. Selon l'invention, on obtient un élément optique dont la teinte peut être choisie avec une grande liberté tout en limitant les changements au cours du processus de fabrication et dont la cadence de fabrication peut être élevée.

Il est ainsi possible d'associer les avantages des verres polarisants avec les effets esthétiques des verres teintés, tout en ayant une cadence de fabrication élevée par injection. En effet, le temps de fabrication d'un élément optique polarisant tel que défini ci-dessus est d'environ 180s.

Ainsi, la quatrième couche peut être surfacée pour former une lentille correctrice sans altérer la teinte ou la couleur du verre.

Bien entendu, par « verre » on entend dans le présent exposé des verres essentiellement en un matériau thermoplastique.

On peut ainsi fabriquer des verres solaires, des écrans solaires, des verres teintés de correction unifocaux, des verres teintés de correction progressifs.

Selon un aspect, la troisième couche teintée est réalisée par un matériau thermoplastique transparent qui est coloré par ajout d'un pigment ou d'un colorant.

Selon un autre aspect, la seconde couche de matériau thermoplastique est de nature chimique identique à la troisième couche de matériau thermoplastique teinté, qui est elle-même de nature chimique identique à la quatrième couche de matériau thermoplastique cristal.

Selon un autre aspect, l'ensemble polarisant possède une épaisseur comprise entre 0,3 et 1mm.

Selon encore un autre aspect, la troisième couche possède une épaisseur comprise entre 0,5mm et 2mm.

Le film polarisant est par exemple un film de polyvinylalcool (PVA).

Le matériau thermoplastique est par exemple compris dans le groupe suivant : polymethyl(meth)acrylate, polycarbonate, polycarbonate/polyester blends, polyamide, polyester, cyclic olefin copolymers, polyuréthane, polysulfone, du TAC (triacétate de cellulose) et leur combinaison.

Le matériau thermodurcissable pour les première et seconde couches est par exemple compris dans le groupe suivant :du CAB (cellulose acétate butyrate).

Grâce au procédé selon l'invention, les couches de l'ensemble polarisant, la couche teintée et la quatrième couche cristal sont intimement liées de manière simple et aisément reproductible. Avec ce procédé, il est possible d'obtenir des lentilles ayant une qualité optique particulièrement bonne, en permettant notamment de limiter voire annuler le risque de déviation optique entre les couches et d'obtenir aussi bien de petites que de grandes séries de lentilles ayant une teinte / couleur stable.

Selon un autre aspect, après l'injection de la troisième couche et avant l'injection de la quatrième couche, on tourne le moule dans lequel se trouvent l'ensemble polarisant et la troisième couche, et on injecte ensuite la quatrième couche d'un matériau thermoplastique cristal sur la troisième couche teintée.

D'autres avantages et caractéristiques apparaîtront à la lecture de la description des figures suivantes, parmi lesquelles :
- la figure 1 montre une vue schématique en coupe d'un élément optique obtenu selon une étape intermédiaire,
- la figure 2 est une vue schématique en coupe illustrant l'étape de moulage de la troisième couche de l'élément optique,
- la figure 3 montre une vue schématique en coupe d'un élément optique obtenu selon l'invention, et
- la figure 4 est une vue schématique en coupe illustrant l'étape de moulage de la quatrième couche de l'élément optique obtenu selon l'invention.

Sur toutes les figures, les mêmes éléments portent les mêmes numéros de référence.

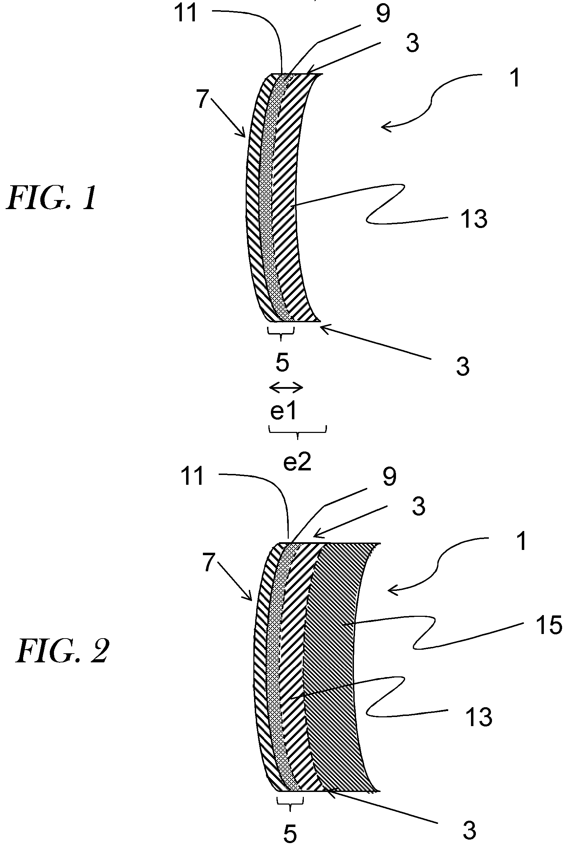

La figure 1 montre selon une vue schématique en coupe un élément optique polarisant teinté 1 obtenu selon une étape intermédiaire.

Cet élément optique polarisant teinté 1 est par exemple destiné à être utilisé pour des lunettes, en particulier des lunettes de soleil. Pour ce faire il est seulement nécessaire de façonner le bord externe 3 selon la forme voulue du cadre de la monture.

Cet élément optique polarisant teinté 1 comprend un ensemble polarisant 5 composé d'au moins d'une première 7 et d'une seconde 9 couches d'un matériau thermoplastique ou thermodurcissable prenant en sandwich un film polarisant 11. Bien entendu, cet ensemble polarisant 5 avec ses couches 5, 7 et 9 est optiquement transparent, c'est-à-dire qu'il laisse passer de la lumière.

Comme on le voit sur la figure 1, l'élément optique 1 comporte en outre une troisième couche 13 d'un matériau thermoplastique transparent teinté ou coloré adhérant par injection à la seconde couche 9.

Selon un mode de réalisation, l'ensemble polarisant 5 possède une épaisseur e1 comprise entre 0,3 et 1mm et la troisième couche 13 possèdent une épaisseur e2 comprise entre 0,5 et 2mm.

Le film polarisant est, selon un autre mode de réalisation, un film de polyvinylalcool (PVA) connu pour ses propriétés polarisantes.

Pour une utilisation lunettes, la couche 13 sera celle destinée à être la plus proche de l'œil de l'utilisateur et la couche 7 celle la plus éloignée de l'œil de l'utilisateur.

Comme évoquée ci-dessus, les deux couches 7, 9 sont réalisées par un matériau thermoplastique ou thermodurcissable, et la couche 13 peut être réalisées en un matériau thermoplastique.

Comme matériau thermoplastique, on choisit, dans un autre mode de réalisation, dans le groupe suivant : polymethyl(meth)acrylate, polycarbonate, polycarbonate/polyester blends, polyamide, polyester, cyclic olefin copolymers, polyuréthane, polysulfone, du TAC (triacétate de cellulose) et leur combinaison

Comme matériau thermodurcissable, on peut par exemple utiliser un matériau transparent comme du CAB (cellulose acétate butyrate).

Pour colorer le matériau thermoplastique, il suffit d'ajouter des pigments ou des colorants. Il peut s'agir de pigments organiques ou minéraux.

Ainsi, tout en ayant un élément optique polarisant, on peut facilement modifier la teinte de celui-ci en utilisant un matériau thermoplastique de couleur adaptée à la teinte finale souhaitée pour la couche 13.

De plus, étant donné que la troisième couche 13 est appliquée sur la seconde couche 9 par injection, on constate un phénomène local de fusion à la frontière entre les deux couches, de manière que tout phénomène non souhaitable de réfraction peut être évité. De fait on utilisera un ensemble polarisant 5 comprenant une couche 9 particulièrement apte à créer cette fusion locale avec la couche en matériau thermoplastique teintée 13. Avantageusement la couche 9 est une couche de matériaux thermoplastique, et de façon préférée, les couches 9 et 13 sont constituées de matériaux de même famille chimiques.

En outre, par la conception de cet élément optique, on n'est plus limité dans le choix de la couleur comme avant.

Comme on va le décrire par la suite, l'élément optique polarisant teinté 1 de la figure 1 obtenu selon une étape intermédiaire est réalisé selon une étape de moulage illustrée schématiquement à la figure 2.

En effet, pour réaliser l'élément optique 1, on part d'un insert polarisant ou wafer préfabriqué formé par l'ensemble polarisant 5.

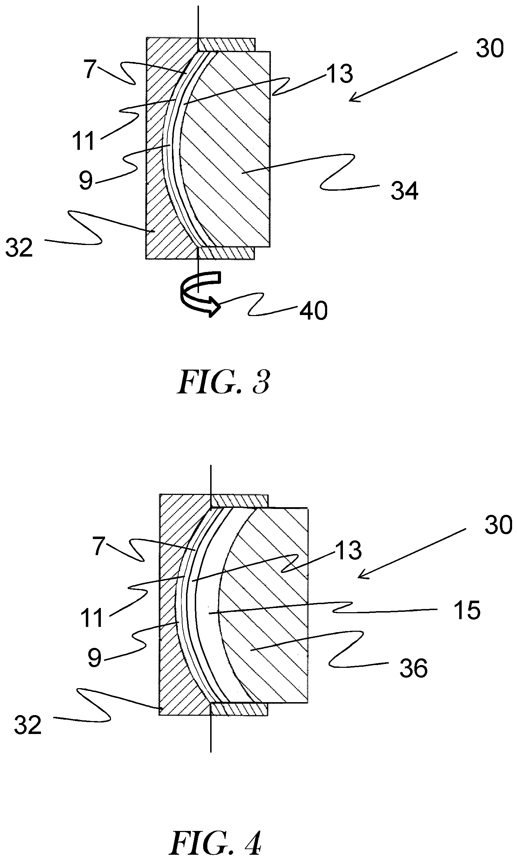

Celui-ci est posé dans une installation de moulage 30 par injection ou presse d'injection comprenant une empreinte concave 32 et deux empreintes convexes 34 (figure 2) et 36 (figure 4).

Avantageusement, l'empreinte concave 32 est montée rotative et les empreintes 34 et 36 se font face de part et d'autre de l'empreinte concave 32 monté sur son axe de rotation.

Les empreintes sont par exemple réalisées en métal poli.

Une fois l'ensemble polarisant 5 posé, on injecte la troisième couche 13 de matériau thermoplastique teinté pour la faire adhérer à la seconde couche 9.

Ainsi, le film polarisant 11 étant protégé et pris en sandwich entre les premières 7 et deuxième 9 couches, on peut librement choisir l'épaisseur de la couche teintée 13 et la concentration en pigments ou colorants pour obtenir la teinte souhaitée.

On comprend donc que l'ensemble polarisant 5 est fabriqué à l'avance en tant que insert ou « wafer » polarisant. Par contre, sur l'élément optique 1, les couches 7, 9, 13 et le film polarisant 11 forment une unité, l'ensemble 5 ne peut plus être distingué en tant que partie individuelle.

Sur la figure 3 est montrée une vue schématique en coupe d'un élément optique obtenu selon l'invention à l'état fini.

Par rapport à la figure 1, l'élément optique 1 comprend en outre une quatrième couche 15 d'un matériau thermoplastique cristal adhérant par injection à la troisième couche 13, cette quatrième couche 15 étant destinée à être surfacée pour un effet correcteur.

Par « cristal » ou « verre cristal », on entend un verre / matériau optique de la classe 0 selon la définition internationale normalisée des verres en cinq catégories de transmission lumineuses. Il s'agit d'un verre présentant dans le domaine spectral visible, un intervalle de transmission lumineuse comprise entre 80% et 100%.

De fait utilisera préférentiellement un élément optique 1 comprenant une couche 13 particulièrement apte à créer cette adhésion par injection avec la couche en matériau thermoplastique cristal 15.

Dans un mode de réalisation, les couches 13 et 15 sont constituées par un matériau thermoplastique appartenant à la même famille chimique. Ce peut être notamment du polycarbonate.

Comme on le voit sur la figure 3, la troisième couche 13 est prise en sandwich entre la deuxième 9 et la quatrième couche 15.

Bien entendu, d'autres couches de traitement peuvent être appliquées par la suite à l'élément optique 1, comme des couches pour un traitement antireflet, anti-rayure, antisalissure, etc.

Après l'étape de moulage intermédiaire de la figure 2, l'élément optique polarisant teinté 1 de la figure 3 est réalisé selon une étape de moulage supplémentaire illustrée schématiquement à la figure 4.

Ainsi, on procède en plus de ce qui a été décrit précédemment à l'injection de la quatrième couche 15 d'un matériau thermoplastique cristal de façon à la faire adhérer à la troisième couche 13 (voir figure 4), cette quatrième couche 15 étant effectivement destinée à être surfacée pour un effet correcteur.

A cet effet, après l'injection de la couche 13, on retire l'empreinte 34, on tourne le moule de la pression d'injection (voir flèche 40 - voir figure 2), puis on fait avancer l'empreinte convexe 36 (voir figure 4) et puis on injecte du matériau thermoplastique cristal pour la réalisation de la quatrième couche 15.

Selon un mode de réalisation de l'invention, l'ensemble polarisant 5 présente une seconde couche de matériau 9 de type thermoplastique de nature chimique identique à la troisième couche 13 teintée, qui est elle-même de nature chimique identique à la quatrième couche 15 d'un matériau cristal. Par nature chimique identique, on entend une composition chimique identique à l'exception de la présence ou non d'un colorant. En effet, dans ces conditions la fusion des matériaux thermoplastiques entre-eux est d'autant meilleure que ceux-ci sont de nature chimique identiques. On utilisera notamment du polycarbonate comme matériau thermoplastique pour toutes les couches 9, 13 et 15.

Grâce à la fabrication de l'élément optique par injection, la cadence de fabrication peut être élevée. La fabrication d'un seul élément optique ne nécessite que 180s environ à titre indicatif.

## Revendications

1. Procédé de fabrication d'un élément optique, **caractérisé en ce qu'**il comprend les étapes suivantes :
- posage d'un ensemble (5) polarisant sous forme d'un insert polarisant et composé d'une première (7) et d'une seconde (9) couches d'un matériau thermoplastique ou thermodurcissable prenant en sandwich un film polarisant (11) dans un moule (30),
- injection d'une troisième couche (13) d'un matériau thermoplastique teinté pour la faire adhérer à la seconde couche (9) de l'ensemble polarisant (5) sous forme d'un insert polarisant,
- injection d'une quatrième couche (15) d'un matériau thermoplastique cristal de façon à la faire adhérer à la troisième couche (13), la quatrième couche (15) étant destinée à être surfacée pour un effet correcteur.

2. Procédé de fabrication selon la revendication 1, **caractérisé en ce qu'**après l'injection de la troisième couche (13) et avant l'injection de la quatrième couche (15), on tourne le moule (30) dans lequel se trouvent l'ensemble polarisant (5) sous forme d'un insert polarisant et la troisième couche (13) et **en ce que** l'on injecte ensuite la quatrième couche (15) d'un matériau thermoplastique cristal sur la troisième couche (13).

3. Procédé selon la revendication 1 ou 2, **caractérisé en ce que** la troisième couche (13) est réalisée par un matériau thermoplastique transparent teinté par ajout d'un pigment ou d'un colorant.

4. Procédé selon l'une quelconque des revendications 1 à 3, **caractérisé en ce que** la seconde couche (9) d'un matériau thermoplastique est de la même famille chimique que le matériau thermoplastique teinté de la troisième couche (13), qui est lui-même de la même famille chimique que le matériau thermoplastique cristal de la quatrième couche (15).

5. Procédé selon l'une quelconque des revendications 1 à 4, **caractérisé en ce que** l'ensemble polarisant (5) sous forme d'un insert polarisant possède une épaisseur comprise entre 0,3 et 1 mm.

6. Procédé selon l'une quelconque des revendications 1 à 5, **caractérisé en ce que** le film polarisant (11) est un film de polyvinylalcool (PVA).

7. Procédé selon l'une quelconque des revendications 1 à 6, **caractérisé en ce que** le matériau thermoplastique est compris dans groupe suivant : polymethyl(meth)acrylate, polycarbonate, polycarbonate/polyester blends, polyamide, polyester, cyclic olefin copolymers, polyuréthane, polysulfone, du triacétate de cellulose et leur combinaison.

8. Procédé selon l'un quelconque des revendications 1 à 6, **caractérisé en ce que** le matériau thermodurcissable des premières et secondes couches (7, 9) est de la cellulose acétate butyrate.

## Patentansprüche

1. Verfahren zur Herstellung eines optischen Elements, **dadurch gekennzeichnet, dass** es die folgenden Schritte umfasst:
- Einlegen einer polarisierenden Gesamtheit (5) in Gestalt eines Einsatzes, der polarisierend wirkt und sich aus einer ersten (7) und einer zweiten (9) Schicht eines thermoplastischen oder duroplastischen Materials zusammensetzt, welches sandwichartig eine polarisierende Folie (11) umschließt, in eine Form (30),
- Einspritzen einer dritten Schicht (13) aus einem gefärbten thermoplastischen Material, damit diese an der zweiten Schicht (9) der polarisierenden Gesamtheit (5) anhaftet, welche in Gestalt eines polarisierenden Einsatzes vorliegt,
- Einspritzen einer vierten Schicht (15) aus einem thermoplastischen, kristallartigen Material, sodass diese an der dritten Schicht (13) anhaftet, wobei die vierte Schicht (15) dazu bestimmt ist, eine Oberflächenbearbeitung zu erfahren, sodass eine korrigierende Wirkung erzielt wird.

2. Herstellungsverfahren nach Anspruch 1, **dadurch gekennzeichnet, dass** nach dem Einspritzen der dritten Schicht (13) und vor dem Einspritzen der vierten Schicht (15) die Form (30), in welcher sich die polarisierende Gesamtheit (5) in Gestalt eines polarisierenden Einsatzes und die dritte Schicht (13) befinden, gedreht wird und dadurch, dass anschließend die vierte Schicht (15) aus einem thermoplastischen, kristallartigen Material auf die dritte Schicht (13) gespritzt wird.

3. Verfahren nach Anspruch 1 oder 2, **dadurch gekennzeichnet, dass** die dritte Schicht (13) aus einem durchsichtigen thermoplastischen Material hergestellt ist, welches durch Zusatz eines Pigments oder eines Farbstoffs gefärbt wurde.

4. Verfahren nach einem beliebigen der Ansprüche 1 bis 3, **dadurch gekennzeichnet, dass** die zweite Schicht (9) aus einem thermoplastischen Material ist, welches derselben chemischen Familie wie das gefärbte thermoplastische Material der dritten Schicht (13) angehört, welches seinerseits derselben chemischen Familie wie das thermoplastische Material mit hoher Brechkraft der vierten Schicht (15) angehört.

5. Verfahren nach einem beliebigen der Ansprüche 1 bis 4, **dadurch gekennzeichnet, dass** die polarisierende Gesamtheit (5) in Gestalt eines polarisierenden Einsatzes eine Dicke im Bereich von 0,3 bis 1 mm besitzt.

6. Verfahren nach einem beliebigen der Ansprüche 1 bis 5, **dadurch gekennzeichnet, dass** es sich bei der polarisierenden Folie (11) um eine Folie aus Polyvinylalkohol (PVA) handelt.

7. Verfahren nach einem beliebigen der Ansprüche 1 bis 6, **dadurch gekennzeichnet, dass** das thermoplastische Material der folgenden Gruppe angehört: Polymethyl(meth)acrylat, Polycarbonat, Polycarbonat/Polyester-Mischungen, Polyamid, Polyester, zyklische Olefincopolymere, Polyurethan, Polysulfon, Cellulosetriacetat, oder deren Kombinationen.

8. Verfahren nach einem beliebigen der Ansprüche 1 bis 6, **dadurch gekennzeichnet, dass** es sich bei dem duroplastischen Material der ersten und zweiten Schicht (7, 9) um Celluloseacetatbutyrat handelt.

## Claims

1. Method for manufacturing an optical element, **characterized in that** it comprises the following steps:
- placement of a polarizing assembly (5) in the form of a polarizing insert and composed of a first layer (7) and a second layer (9) of a thermoplastic or thermosetting material sandwiching a polarizing film (11) in a mould (30),
- injection of a third layer (13) of a tinted thermoplastic material to make it adhere to the second layer (9) of the polarizing assembly (5) in the form of a polarizing insert,
- injection of a fourth layer (15) of a crystal thermoplastic material so as to make it adhere to the third layer (13), the fourth layer (15) being intended to be surface finished for a corrective effect.

2. Manufacturing method according to Claim 1, **characterized in that**, after the injection of the third layer (13) and before the injection of the fourth layer (15), the mould (30) in which the polarizing assembly (5) in the form of a polarizing insert and the third layer (13) are located is turned, and **in that** the fourth layer (15) of a crystal thermoplastic material is then injected on the third layer (13).

3. Method according to Claim 1 or 2, **characterized in that** the third layer (13) is produced by a transparent thermoplastic material that is tinted by addition of a pigment or a dye.

4. Method according to any one of Claims 1 to 3, **characterized in that** the second layer (9) of a thermoplastic material is from the same chemical class as the tinted thermoplastic material of the third layer (13), which is itself from the same chemical class as the crystal thermoplastic material of the fourth layer (15) .

5. Method according to any one of Claims 1 to 4, **characterized in that** the polarizing assembly (5) in the form of a polarizing insert has a thickness comprised between 0.3 and 1 mm.

6. Method according to any one of Claims 1 to 5, **characterized in that** the polarizing film (11) is a polyvinyl alcohol (PVA) film.

7. Method according to any one of Claims 1 to 6, **characterized in that** the thermoplastic material is comprised in the following group: polymethyl(meth)acrylate, polycarbonate, polycarbonate/polyester blends, polyamide, polyester, cyclic olefin copolymers, polyurethane, polysulfone, cellulose triacetate and a combination thereof.

8. Method according to any one of Claims 1 to 6, **characterized in that** the thermosetting material of the first and second layers (7, 9) is cellulose acetate butyrate.
